# EUROPEAN PATENT APPLICATION

(11) **EP 4 439 926 A1**
(43) Date of publication of application: **02.10.2024**
(21) Application number: 22909861.1
(22) Date of filing: 15.12.2022
(51) Int. Cl.: H02J 50/23

(54) **WIRELESS CHARGING APPARATUS**

(30) Priority: 22.12.2021 CN 202111584133
(71) Applicant: Huawei Technologies Co., Ltd., Shenzhen, Guangdong 518129 (CN); University of Electronic Science and Technology of China, Chengdu, Sichuan 611731 (CN)
(72) Inventor: ZHAO, Ming, Shenzhen, Guangdong 518129 (CN); MA, Xin, Chengdu, Sichuan 611731 (CN); ZHAO, Deshuang, Chengdu, Sichuan 611731 (CN); JIANG, Weipeng, Shenzhen, Guangdong 518129 (CN); HUANG, Tao, Shenzhen, Guangdong 518129 (CN)
(74) Representative: Körber, Martin Hans
(86) International application number: PCT/CN2022/139292
(87) International publication number: WO 2023/116547

(57) **Abstract**

A wireless charging apparatus is provided. The apparatus uses a multi-feed, multi-mode, and resonance coherent working mechanism and wirelessly charges an energy receiving apparatus through a focusing field, thereby effectively improving wireless charging efficiency and implementing miniaturization of an energy receiving antenna. The wireless charging apparatus includes a cavity (1) and a phased array antenna. The cavity (1) includes an even number of side faces (2). The even number of side faces (2) are parallel in pairs. Each side face (2) has a capability of reflecting an electromagnetic wave. The phased array antenna includes an antenna array. The antenna array includes a plurality of antennas (3). The plurality of antennas (3) are disposed on the even number of side faces (2) and are configured to emit electromagnetic waves to charge an energy receiving device (4) placed in the cavity (1). A distance between two parallel side faces (2) is equal to an integer multiple of a half wavelength of an electromagnetic wave emitted by a first antenna, so that a standing-wave field is generated in the cavity (1). The first antenna is an antenna (3) disposed on the two parallel side faces (2).

## Description

This application claims priority to Chinese Patent Application No. CN202111584133.4, filed with the China National Intellectual Property Administration on December 22, 2021 and entitled "WIRELESS CHARGING APPARATUS", which is incorporated herein by reference in its entirety.

### TECHNICAL FIELD

This application relates to the field of charging technologies, and in particular, to a wireless charging apparatus.

### BACKGROUND

In recent years, the wireless charging (Wireless Power Transfer, WPT) industry has been developing rapidly into a vast emerging industry with large-scale commercial applications first achieved in the fields of smartphones, smart wearables, and the like, and commercial applications already launched in the fields of intelligent vehicles, home internet of things (Internet of Things, IoT), industrial IoT, uncrewed aerial vehicles, and the like.

Currently, large-scale commercial applications are implemented mainly for a contact magnetic induction wireless charging technology. However, this technology merely removes a charging cable for a terminal, and does not implement truly free air charging. "Truly" wireless charging technologies represented by radio frequency (Radio Frequency, RF) wireless charging are rapidly developing. By contrast, RF wireless charging can implement long-distance, non-contact, and truly free charging, and is to become a new mainstream wireless charging technology in the next 10 years.

RF wireless charging apparatuses are divided into mainly two forms: "internal charging" and "external charging". "External charging" is to radiate electromagnetic wave energy to an energy receiving terminal in free space through various forms of antennas or antenna arrays. "Internal charging" is based on a structure of a cavity, and is to radiate electromagnetic wave energy to an energy receiving terminal in the cavity through a transmit antenna or antenna array. In comparison, "external charging" is freer, and "internal charging" is more efficient and safer.

However, for an existing wireless charging apparatus in an "internal charging" form, impact of an antenna and a structure of a cavity on wireless charging efficiency is not fully considered. Either existence of an energy transmission blind region in the cavity or difficulties in flexibly adjusting a shape and a location of a high-efficiency charging region result in poor wireless charging experience.

### SUMMARY

Embodiments of this application provide a wireless charging apparatus. The apparatus uses a multi-feed, multi-mode, and resonance coherent working mechanism and wirelessly charges an energy receiving apparatus through a focusing field, thereby effectively improving wireless charging efficiency and implementing miniaturization of an energy receiving antenna.

This application provides a wireless charging apparatus. The wireless charging apparatus includes a cavity and a phased array antenna. The cavity may be understood as a body including an inner cavity. The cavity includes an even number of side faces. The even number of side faces are parallel in pairs. Each side face has a capability of reflecting an electromagnetic wave. The phased array antenna includes an antenna array, a feed network, and a controller. The antenna array includes a plurality of antennas. There may be one or more antenna arrays. The plurality of antennas are disposed on the even number of side faces and are configured to emit electromagnetic waves to charge an energy receiving device placed in the cavity. There are a plurality of cases in which the plurality of antennas distributed on the even number of side faces. This is not specifically limited in this application. A distance between two parallel side faces is equal to an integer multiple of a half wavelength of an electromagnetic wave emitted by a first antenna. The first antenna is an antenna disposed on the two parallel side faces.

Because a distance between two parallel side faces is equal to an integer multiple of a half wavelength of an electromagnetic wave emitted by an antenna, the electromagnetic wave emitted by the antenna and the electromagnetic wave are reflected by the side faces for a plurality of times to form a resonant standing wave field, according to a resonant cavity theory. Resonance enables more energy to be radiated into the cavity. In addition, the resonant standing wave field enables the radiated energy to be concentrated in the cavity, and a radiation loss to the outside is low. As a result, more energy is retained within the cavity, so that more energy is provided to the energy receiving device in the cavity. This improves wireless charging efficiency, and is more energy-saving and cost-effective.

In a feasible implementation, the cavity further includes a bottom face. The bottom face has a capability of reflecting an electromagnetic wave. A vertical distance between a second antenna and the bottom face is equal to an integer multiple of a half wavelength of an electromagnetic wave emitted by the second antenna. The vertical distance may also be understood as a height of the second antenna. The second antenna is one of the plurality of antennas.

Because a vertical distance between an antenna and the bottom face is an integer multiple of a half wavelength of an electromagnetic wave emitted by the antenna, the electromagnetic wave emitted by the antenna and a reflected wave obtained by reflecting the electromagnetic wave by the bottom face can be coherently superposed. This improves wireless charging efficiency, and is more energy-saving and cost-effective.

In a feasible implementation, the antenna includes a radiating element. A ratio of a length of a resonant edge of the radiating element to a length of a non-resonant edge of the radiating element is greater than or equal to 4. The resonant edge of the radiating element is generally a long edge of the radiating element, and the non-resonant edge of the radiating element is generally a short edge of the radiating element.

The ratio of the length of the resonant edge of the radiating element to the length of the non-resonant edge of the radiating element is greater than or equal to 4. A pattern of such an element has characteristics of a wide beam and low gains, so that coupling between antennas can be effectively reduced, and a proper radiation area can be maintained. Therefore, such an element is most suitable for providing high radiation efficiency in a cavity in a complex electromagnetic environment.

In a feasible implementation, a quantity of the antennas in the antenna array is the same as a quantity of the side faces. One antenna in the antenna array is disposed on each side face.

One antenna in the antenna array is disposed on each side face, so that the energy receiving device is charged when a small quantity of antennas are used. This reduces costs.

In a feasible implementation, frequencies of electromagnetic waves emitted by the plurality of antennas are the same.

The frequencies of the electromagnetic waves emitted by the plurality of antennas are the same. This is more helpful for the phased array antenna to control a process of coherent superposition of the electromagnetic waves. In this case, resonant standing wave fields that are in multiple modes and are generated by multi-feed antennas are coherently superposed at an energy receiving antenna, to generate an energy focusing field with a single peak value. This helps miniaturize the energy receiving antenna.

In a feasible implementation, the cavity further includes a bottom face. Vertical distances between the bottom face and the plurality of antennas are the same.

The vertical distances between the bottom face and the plurality of antennas are the same. This is more helpful for the phased array antenna to control the process of coherent superposition of the electromagnetic waves.

In a feasible implementation, any two adjacent antennas in the plurality of antennas are at an equal spacing.

Any adjacent antennas in the plurality of antennas are at an equal spacing. This is more helpful for the phased array antenna to control the process of coherent superposition of the electromagnetic waves.

In a feasible implementation, there are a plurality of antenna arrays. Vertical distances between the bottom face and antennas in different antenna arrays are different.

Because there are the plurality of antenna arrays, and the vertical distances between the bottom face and the antennas in the different antenna arrays are different, an antenna array at a corresponding height may be selected according to an actual requirement, to supply power to the energy receiving device.

In a feasible implementation, an opening is provided at the top of the cavity.

The opening is provided at the top of the cavity, so that the wireless charging apparatus is in a semi-closed structure. Therefore, it is convenient to place the energy receiving device in the cavity and take out the energy receiving device from the cavity. In addition, it can be ensured that a communication function of the energy receiving device can be normally used during charging. This improves user experience.

In a feasible implementation, the wireless charging apparatus further includes a top cover. The top cover is disposed at the opening at the top of the cavity, and an inner surface of the top cover has a capability of reflecting an electromagnetic wave.

Because the inner surface of the top cover has the capability of reflecting an electromagnetic wave, the electromagnetic wave can be restricted within the cavity. This reduces energy leakage, and improves the charging efficiency. In addition, due to existence of the top cover, more choices are provided to a user. To be specific, the user can close the top cover to improve the charging efficiency, or the user can open the top cover to maintain a communication capability of the energy receiving device when high charging efficiency is ensured.

### BRIEF DESCRIPTION OF DRAWINGS

FIG. 1 is a schematic diagram of an embodiment of a wireless charging apparatus according to this application;
FIG. 2 is a schematic diagram of a distance between side faces according to an embodiment of this application;
FIG. 3 is a schematic diagram of a height of an antenna according to an embodiment of this application;
FIG. 4 is a schematic diagram of an embodiment in which nodes and antinodes are staggered according to an embodiment of this application; and
FIG. 5 is a schematic diagram of a process of charging an energy receiving device by using a time reversal algorithm-based beam focusing method according to an embodiment of this application.

### DESCRIPTION OF EMBODIMENTS

The following describes in detail technical solutions in embodiments of this application with reference to the accompanying drawings in embodiments of this application.

For ease of understanding, the following first describes the terms mentioned in embodiments of this application.

A phased array antenna is an antenna whose shape of a pattern is changed by controlling a feed phase of a radiating element in an antenna array.

Multi-feed means that there are a plurality of independent feed channels in an energy transmission cavity and each feed channel can independently control an amplitude and a phase.

Multi-mode means that a plurality of antennas in a cavity excite resonant standing wave fields that are in different modes and the different resonant standing wave fields have a same resonance frequency but different spatial electric field distributions.

Resonant coherence means that in-phase vector superposition is performed, at an energy receiving antenna, on resonant standing wave fields that are in multiple modes, to form an energy focusing field with a single peak value.

Time reversal is transformation in which spatial coordinates remain unchanged and a sign of a time coordinate is changed. In frequency domain, time reversal is equivalent to phase conjugation. In time domain, time reversal is an operation of reversing an order of time-domain signals in a time dimension, that is, reversing the signals on a time axis, to change a signal sampled at an earliest moment to a signal at a last moment and change a signal at the last moment to a signal at the earliest moment.

A time reversal-based wireless energy transmission technology is as follows: A detection signal is received by using a sensor array. Then, time reversal is performed on an energy transmission signal based on amplitude and phase information of the detection signal. Next, the sensor array emits an energy transmission signal obtained through time reversal. Energy transmission signals emitted by all sensors automatically form an electromagnetic energy focusing spot at a source of the detection signal (a location of an energy receiving end), to supply power to a device at the location of the energy receiving end. An electromagnetic energy density decreases rapidly at a location that deviates from the source of the detection signal. Wireless energy transmission with this spatial electromagnetic energy point focusing characteristic is also referred to as point-focusing wireless energy transmission.

An energy transmitting device is a device that transmits energy, and may be specifically understood as a charging device in embodiments of this application.

An energy receiving device is a device that receives energy, and may be specifically understood as a charged device in embodiments of this application.

A traveling wave (travelling wave) is a transmission state of a plane wave on a transmission line. An amplitude of the traveling wave changes exponentially in a propagation direction, and a phase of the traveling wave changes linearly along the transmission line.

A standing wave is a distribution state formed along a transmission line by two waves with a same frequency and opposite transmission directions. Generally, one of the two waves is a reflected wave of the other wave. In terms of a waveform, locations of a node and an antinode of the standing wave keep unchanged. This gives an impression of "standing still". However, an instantaneous value of the standing wave changes with time.

It should be understood that, a structure of a cavity of a wireless charging apparatus in an "internal charging" form affects reflection of an electromagnetic wave in the cavity, and further affects an electromagnetic field distribution in the cavity. Different electromagnetic field distributions affect wireless charging efficiency of an energy receiving device in the cavity.

Based on this, embodiments of this application provide a wireless charging apparatus. A cavity is designed in the apparatus, so that an electromagnetic wave emitted by an antenna can form a standing wave in the cavity and a resonant standing wave field can be further formed in the cavity. As a result, an energy receiving device in the cavity is charged through the resonant standing wave field.

In an existing wireless charging apparatus, an electromagnetic wave may be considered as a traveling wave. Because the traveling wave is continuously propagated outward from a wave source, an electromagnetic field formed by the traveling wave is prone to be propagated to outside of a cavity. This causes an energy loss, and results in low wireless charging efficiency. However, a resonant standing wave field is concentrated in the cavity, and a radiation loss is low. As a result, more energy is retained within the cavity. Therefore, in embodiments of this application, a cavity is designed, so that a standing wave field is formed in the cavity and more energy is provided to an energy receiving device in the cavity. This improves wireless charging efficiency.

The following specifically describes a wireless charging apparatus provided in embodiments of this application.

The wireless charging apparatus provided in embodiments of this application is configured to provide contactless wireless charging to an energy receiving device. The energy receiving device may be a smart device with a small size, such as a smartphone, a smart wearable product (earphones, a watch, a band, glasses, or the like), a smart small home appliance, a toy, or a remote control.

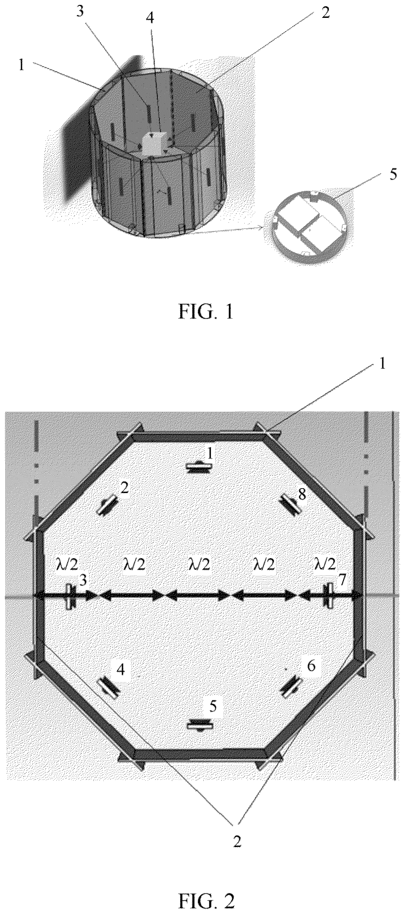

As shown in FIG. 1, this application provides an embodiment of a wireless charging apparatus. The wireless charging apparatus includes a cavity 1 and a phased array antenna.

The cavity 1 may be understood as a body including an inner cavity. Side faces 2 form the inner cavity through enclosure.

The cavity 1 includes an even number of side faces 2. The even number of side faces 2 are parallel in pairs. Each side face 2 has a capability of reflecting an electromagnetic wave. The side face 2 may also be referred to as an electromagnetic wave emitting face.

A shape of the inner cavity of the cavity 1 is not specifically limited in embodiments of this application, provided that the cavity 1 includes the even number of side faces 2 that are parallel in pairs. A quantity of the side faces 2 in the cavity 1 is not specifically limited in embodiments of this application. For example, there may be four, six, or eight side faces 2.

FIG. 1 shows a case in which there are eight side faces 2. Correspondingly, an internal shape of the cavity 1 (namely, the shape of the inner cavity) may be a regular octagonal prism. When there are six side faces 2, the internal shape of the cavity 1 may be a regular hexagonal prism.

The side face 2 is usually vertical to a bottom face 5 of the cavity 1.

It should be noted that, in FIG. 1, to show a component on the bottom face 5, the bottom face 5 presents a non-smooth structure. However, in an actual application, the bottom face 5 is usually smooth.

To enable the side face 2 to have the capability of reflecting an electromagnetic wave, there are a plurality of choices of materials of the side face 2. This is not specifically limited in embodiments of this application. For example, a PCB, a metal (for example, copper) shielding board, or some non-metal materials that have good shielding and reflection effect on an electromagnetic wave may be selected for the side face 2.

An external shape of the cavity 1 is not specifically limited in embodiments of this application. For example, as shown in FIG. 1, the external shape of the cavity 1 may be a cylinder. Alternatively, the external shape of the cavity 1 may be the same as the internal shape of the cavity 1. For example, when the internal shape of the cavity 1 is a regular octagonal prism, the external shape of the cavity 1 is also a regular octagonal prism.

The phased array antenna usually includes an antenna array, a feed network, and a controller. As shown in FIG. 1, the feed network and the controller may be disposed on the bottom face 5 of the cavity 1.

In embodiments of this application, improvements are mainly made to the antenna array. Therefore, the following mainly describes the antenna array. For understanding of the feed network and the controller, refer to the conventional technology.

The phased array antenna includes the antenna array. The antenna array includes a plurality of antennas 3.

There may be one or more antenna arrays. The following first describes a plurality of antennas 3 in one antenna array, and then describes a case in which there are a plurality of antenna arrays.

Specifically, the plurality of antennas 3 are disposed on the even number of side faces 2 and are configured to emit electromagnetic waves to charge an energy receiving device 4 placed in the cavity 1.

There are various distributions of the plurality of antennas 3 on the even number of side faces 2. This is not specifically limited in embodiments of this application. The following specifically describes the distributions of the plurality of antennas 3.

### 1. A height of the antenna 3

The height is relative to the bottom face 5 of the cavity 1. Therefore, the height may also be understood as a vertical distance between the antenna 3 and the bottom face 5.

In a feasible implementation, the cavity 1 further includes a bottom face 5. The bottom face 5 has a capability of reflecting an electromagnetic wave. A material of the bottom face 5 is similar to that of the side face 2. For details, refer to related descriptions of the side face 2.

A vertical distance between a second antenna and the bottom face 5 is equal to an integer multiple of a half wavelength of an electromagnetic wave emitted by the second antenna. The second antenna is one of the plurality of antennas 3.

For example, when a frequency of the electromagnetic wave is 5.8 GHz, the vertical distance between the second antenna and the bottom face 5 may be twice the half wavelength, that is, 5.17 cm.

The vertical distance between the second antenna and the bottom face 5 may be a vertical distance between a center of the second antenna and the bottom face 5. The second antenna includes a radiating element. The vertical distance between the second antenna and the bottom face 5 may alternatively be a vertical distance between the radiating element and the bottom face 5.

Because the vertical distance between the antenna 3 and the bottom face 5 is an integer multiple of a half wavelength of an electromagnetic wave emitted by the antenna 3, the electromagnetic wave emitted by the antenna 3 and a reflected wave obtained by reflecting the electromagnetic wave by the bottom face 5 can be coherently superposed. This improves wireless charging efficiency, and is more energy-saving and cost-effective.

If there is at least one antenna 3 in the plurality of antennas 3 in the antenna array, where a vertical distance between the at least one antenna 3 and the bottom face 5 is an integer multiple of a half wavelength of an electromagnetic wave emitted by the antenna 3, a standing wave can be generated in the cavity 1. Therefore, in embodiments of this application, the second antenna represents one of the plurality of antennas 3.

Based on the foregoing description, in another feasible implementation, when the cavity 1 further includes a bottom face 5, vertical distances between the bottom face 5 and the plurality of antennas 3 are the same. In other words, vertical distances between the bottom face 5 and all the antennas 3 in the antenna array are the same.

In this case, it may be considered that all the antennas 3 in the antenna array are at a same height.

### 2. A correspondence between the antenna 3 and the side face 2

One or more antennas 3 may be disposed on one side face 2. This is not specifically limited in embodiments of this application.

For example, a quantity of the antennas 3 in the antenna array is the same as the quantity of the side faces 2. One antenna 3 in the antenna array is disposed on each side face 2. A location of the antenna 3 on the side face 2 is not specifically limited in embodiments of this application. The antenna 3 may be disposed at a location of a midline on the side face 2, or may be disposed at a location, on the side face 2, that deviates from the midline.

For example, as shown in FIG. 1, there are eight side faces 2, and there are also eight antennas 3.

One antenna 3 is disposed on each side face 2, to ensure that adjacent antennas 3 are at approximately same spacings. This helps the phased array antenna to charge the energy receiving device 4 by using a phased array technology.

### 3. A spacing between the antennas 3

Specifically, in a feasible implementation, any two adjacent antennas 3 in the plurality of antennas 3 are at an equal spacing.

For example, as shown in FIG. 1, each antenna 3 is disposed in the middle of the side face 2. Therefore, the plurality of antennas 3 are distributed at equal spacings.

Any adjacent antennas 3 in the plurality of antennas 3 are at an equal spacing. This is more helpful to control electromagnetic wave emission by using the phased array antenna.

### 4. A frequency of the electromagnetic wave emitted by the antenna 3

In a feasible implementation, frequencies of electromagnetic waves emitted by the plurality of antennas 3 are the same. This is more helpful to control a process of coherent superposition of the electromagnetic waves.

### 5. A radiating element in the antenna 3

Specifically, the antenna 3 includes the radiating element. A ratio of a length of a resonant edge of the radiating element to a length of a non-resonant edge of the radiating element is greater than or equal to 4.

The resonant edge of the radiating element is generally a long edge of the radiating element, and the non-resonant edge of the radiating element is generally a short edge of the radiating element.

It should be noted that, to reduce interference between the adjacent antennas 3, the antenna 3 is usually vertically disposed. In other words, the resonant edge of the radiating element is perpendicular to the bottom face 5, and the non-resonant edge of the radiating element is parallel to the bottom face 5 and the side face 2, so that a distance between the antennas 3 is reduced.

In a feasible implementation, the antenna 3 may be a narrow strip-shaped air microstrip antenna 3.

The ratio of the length of the resonant edge of the radiating element to the length of the non-resonant edge of the radiating element is greater than or equal to 4. A pattern of such an element has characteristics of a wide beam and low gains, so that coupling between antennas can be effectively reduced, and a proper radiation area can be maintained. Therefore, such an element is most suitable for providing high radiation efficiency in a cavity in a complex electromagnetic environment.

One or more antennas 3 may be disposed on one side face 2. Therefore, in embodiments of this application, a distance between two parallel side faces 2 is equal to an integer multiple of a half wavelength of an electromagnetic wave emitted by a first antenna. The first antenna is an antenna 3 disposed on the two parallel side faces 2.

For example, as shown in FIG. 2, the inner cavity includes eight side faces 2, and only one antenna 3 is disposed on each side face 2.

A distance between the side faces 2 is five times a half wavelength emitted by an antenna 3 on the side face 2. For example, when a frequency of an electromagnetic wave emitted by the antenna 3 on the side face 2 is 5.8 GHz, the distance between the side faces 2 may be approximately 13 cm.

The foregoing describes a case in which there is one antenna array, and the following describes a case in which there are a plurality of antenna arrays.

When there are a plurality of antenna arrays and a plurality of antennas 3 in each antenna array are at a same height, vertical distances between the bottom face 5 and antennas 3 in different antenna arrays are different.

This can also be simply understood as a case in which the wireless charging apparatus provided in embodiments of this application includes a plurality of antenna arrays described above, and the plurality of antenna arrays are at different heights.

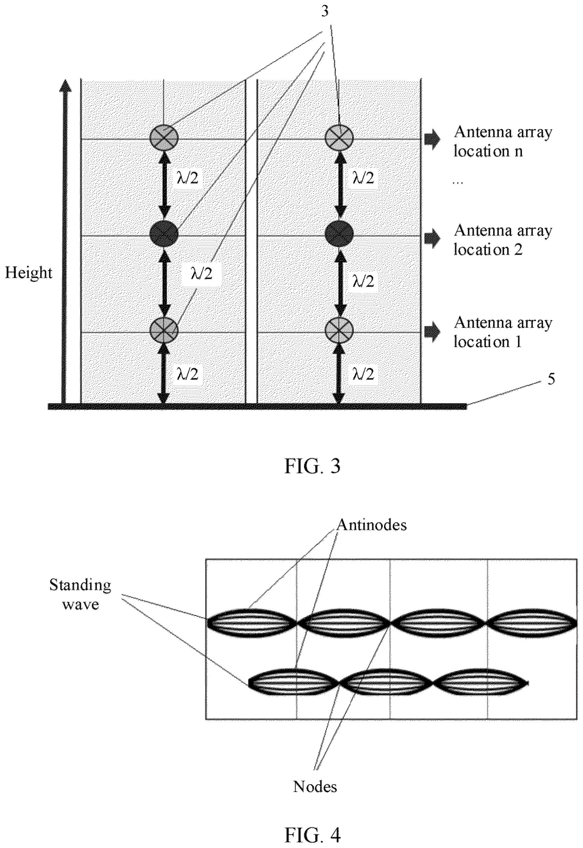

For example, refer to FIG. 3. There are n antenna arrays. The n antenna arrays are at different heights, and the heights each are an integer multiple of a half wavelength of an electromagnetic wave. Locations of the n antenna arrays are shown in FIG. 3 and are sequentially an antenna array location 1, an antenna array location 2, ..., and an antenna array location n from bottom to top. Frequencies of electromagnetic waves emitted by antennas 3 in each antenna array are the same. A difference between heights of adjacent antenna arrays is equal to the half wavelength of the electromagnetic wave.

Only two antennas 3 are shown in the antenna array in FIG. 3. It should be noted that a quantity of antennas 3 in the antenna array is not limited to 2.

Because there are a plurality of antenna arrays, and vertical distances between the bottom face 5 and antennas 3 in different antenna arrays are different, an antenna array at a corresponding height may be selected according to an actual requirement, to supply power to the energy receiving device 4.

For example, an antenna array at a corresponding height may be selected based on a height of the energy receiving device 4 in the cavity 1, to supply power to the energy receiving device 4.

In embodiments of this application, because the distance between the two parallel side faces 2 is equal to the integer multiple of the half wavelength of the electromagnetic wave emitted by the antenna 3, the electromagnetic wave emitted by the antenna 3 is reflected by the side faces 2 for a plurality of times to form a resonant standing wave field, according to a resonant cavity theory. Resonance enables more energy to be radiated into the cavity. In addition, the resonant standing wave field enables the radiated energy to be more concentrated in the cavity 1, and a radiation loss to the outside is low. As a result, more energy is retained within the cavity 1, so that more energy is provided to the energy receiving device 4 in the cavity 1. This improves wireless charging efficiency, and is more energy-saving and cost-effective.

In the standing wave field, locations of an antinode and a node are fixed. Therefore, there is an uneven wave energy distribution in a charging scenario. This may lead to a large difference in charging efficiency at different locations in the cavity 1.

To address the foregoing problem, in embodiments of this application, the plurality of antennas 3 are disposed on the side faces of the cavity 1, to obtain an antenna array with multiple feed sources. When the distance between the side faces of the cavity 1 is an integer multiple of a half wavelength of an electromagnetic wave, the antenna array with multiple feed sources can form, in the cavity 1, standing waves that are in multiple modes. Nodes and antinodes of standing waves in different modes are staggered with, complement, and are superposed with each other in the cavity 1, so that a distribution of entire electromagnetic wave energy in the cavity 1 can be smoothed. This ensures that charging efficiency at all locations in the cavity 1 is approximately the same, and an energy transmission blind region (namely, a location at which charging efficiency is excessively low) is eliminated.

For example, FIG. 4 shows standing waves in two modes. Nodes and antinodes of the standing waves in the two modes are staggered with, complement, and are superposed with each other, so that electromagnetic wave energy is evenly distributed. This ensures that charging efficiency at all locations in the cavity 1 is approximately the same, and an energy transmission blind region is eliminated.

Based on the foregoing description, it can be learned that in embodiments of this application, power is supplied to the energy receiving device 4 through the phased array antenna. A phase and an amplitude of the electromagnetic wave emitted by the antenna 3 can be controlled through the phased array antenna. In this way, phases and amplitudes of standing waves that are in multiple modes and are generated by the resonant cavity are controlled, so that the standing waves in the multiple modes are coherently superposed at the energy receiving device 4 to form a point-shaped energy focusing spot with a single peak value. As a result, more energy is provided to the energy receiving device 4. This improves charging efficiency.

It should be noted that the phased array antenna may charge the energy receiving device 4 by using different control methods. A type of the control method is not specifically limited in embodiments of this application.

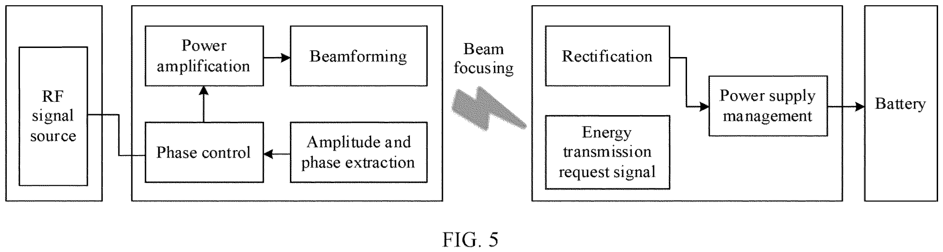

For example, the energy receiving device 4 may be charged by using a time reversal method-based beam focusing method. With reference to FIG. 5, the following describes a process of performing charging by using the method.

As shown in FIG. 5, the energy receiving device 4 first emits an energy transmission request signal. The phased array antenna receives the energy transmission request signal, and performs amplitude and phase extraction on the energy transmission request signal to obtain amplitude and phase information of the energy transmission request signal. The phased array antenna performs phase control on a signal output by an RF signal source based on the amplitude and phase information through a phase shifter, then performs amplification through a power amplifier and performs beamforming, and finally sends a signal through an antenna 3. A beam is focused on a region in which the energy receiving device 4 is located. After receiving the signal, the energy receiving device 4 rectifies the signal, and charges a built-in battery through a power supply management module (shown by power supply management in FIG. 5).

It can be learned from the foregoing description that the wireless charging apparatus provided in embodiments of this application can generate a resonant standing wave field in the inner cavity, and the resonant standing wave field can maximumly restrict most energy within the cavity 1. This reduces energy leakage to outside of the cavity, and improves electromagnetic radiation safety.

Based on this, in a feasible implementation, an opening is provided at the top of the cavity 1.

The opening is provided at the top of the cavity 1, so that the wireless charging apparatus is in a semi-closed structure. Therefore, it is convenient to place the energy receiving device 4 in the cavity 1 and take out the energy receiving device 4 from the cavity 1. In addition, it can be ensured that a communication function of the energy receiving device 4 can be normally used during charging. This improves user experience.

It may be understood that although the wireless charging apparatus provided in embodiments of this application can reduce energy leakage, a small amount of energy is still leaked. Therefore, to further improve charging efficiency, in a feasible implementation, the wireless charging apparatus further includes a top cover.

The top cover is disposed at the opening at the top of the cavity 1, and an inner surface of the top cover has a capability of reflecting an electromagnetic wave.

Because the inner surface of the top cover has the capability of reflecting an electromagnetic wave, the electromagnetic wave can be restricted within the cavity 1. This reduces energy leakage, and improves the charging efficiency. In addition, due to existence of the top cover, more choices are provided to a user. To be specific, the user can close the top cover to improve the charging efficiency, or the user can open the top cover to maintain a communication capability of the energy receiving device 4 when high charging efficiency is ensured.

## Claims

1. A wireless charging apparatus, wherein the wireless charging apparatus comprises a cavity and a phased array antenna;
the cavity comprises an even number of side faces, the even number of side faces are parallel in pairs, and each side face has a capability of reflecting an electromagnetic wave;
the phased array antenna comprises an antenna array, and the antenna array comprises a plurality of antennas;
the plurality of antennas are disposed on the even number of side faces and are configured to emit electromagnetic waves to charge an energy receiving device placed in the cavity; and
a distance between two parallel side faces is equal to an integer multiple of a half wavelength of an electromagnetic wave emitted by a first antenna, and the first antenna is an antenna disposed on the two parallel side faces.

2. The wireless charging apparatus according to claim 1, wherein the cavity further comprises a bottom face, and the bottom face has a capability of reflecting an electromagnetic wave; and
a vertical distance between a second antenna and the bottom face is equal to an integer multiple of a half wavelength of an electromagnetic wave emitted by the second antenna, and the second antenna is one of the plurality of antennas.

3. The wireless charging apparatus according to claim 1 or 2, wherein the antenna comprises a radiating element; and
a ratio of a length of a resonant edge of the radiating element to a length of a non-resonant edge of the radiating element is greater than or equal to 4.

4. The wireless charging apparatus according to any one of claims 1 to 3, wherein a quantity of the antennas in the antenna array is the same as a quantity of the side faces; and
one antenna in the antenna array is disposed on each side face.

5. The wireless charging apparatus according to any one of claims 1 to 4, wherein frequencies of electromagnetic waves emitted by the plurality of antennas are the same.

6. The wireless charging apparatus according to any one of claims 1 to 5, wherein the cavity further comprises a bottom face, and vertical distances between the bottom face and the plurality of antennas are the same.

7. The wireless charging apparatus according to claim 6, wherein any two adjacent antennas in the plurality of antennas are at an equal spacing.

8. The wireless charging apparatus according to claim 6 or 7, wherein there are a plurality of antenna arrays; and
vertical distances between the bottom face and antennas in different antenna arrays are different.

9. The wireless charging apparatus according to any one of claims 1 to 8, wherein an opening is provided at the top of the cavity.

10. The wireless charging apparatus according to claim 9, wherein the wireless charging apparatus further comprises a top cover; and
the top cover is disposed at the opening at the top of the cavity, and an inner surface of the top cover has a capability of reflecting an electromagnetic wave.
